# FASCICULE DE BREVET EUROPEEN

(11) **EP 3 717 956 B1**
(45) Date de publication et mention de la délivrance du brevet: **29.12.2021**
(21) Numéro de dépôt: 18808358.8
(22) Date de dépôt: 28.11.2018
(51) Int. Cl.: G02B 27/01, F41G 3/22, G06F 1/16, G06F 3/01

(54) **DISPOSITIF DE VISION POUR PILOTE D'AERONEF**
SICHTGERÄT FÜR FLUGZEUGPILOT
VIEWING DEVICE FOR AIRCRAFT PILOT

(30) Priorité: 30.11.2017 FR 1701259
(43) Date de publication de la demande: 07.10.2020
(73) Titulaire: Safran Electronics & Defense, 75015 Paris (FR)
(72) Inventeur: MICHEL, Franck, 77550 MOISSY-CRAMAYEL (FR); LECUYER, Sébastien, 77550 MOISSY-CRAMAYEL (FR); SAUVAIN, Maurice, 77550 MOISSY-CRAMAYEL (FR)
(74) Mandataire: Lavaud, Thomas
(86) Numéro de dépôt international: PCT/EP2018/082895
(87) Numéro de publication internationale: WO 2019/106046

(56) Documents cités:
- EP-A1- 2 469 869
- WO-A1-2017/115365
- FR-A2- 2 659 934
- US-A1- 2017 069 136
- US-B1- 7 180 476
- US-B1- 9 785 231

## Description

L'invention concerne le domaine des dispositifs de vision pour pilote d'aéronef.

### ARRIERE PLAN DE L'INVENTION

L'utilisation de la technologie dite de « réalité augmentée » tend à se développer dans les aéronefs modernes, et notamment dans les avions de chasse.

La réalité augmentée permet d'intégrer dans l'environnement visible réel du pilote des objets de réalité augmentée, de sorte que ces objets de réalité augmentée sont accessibles au pilote sans que celui-ci ait besoin de détourner le regard.

Les objets de réalité augmentée sont notamment des images ou des informations écrites.

Les images sont par exemple des images d'une piste d'atterrissage, de reliefs du sol (montagne, vallée, etc.), de la mer, d'une cible quelconque, d'autres aéronefs ou de divers véhicules, de bâtiments divers, etc. Les informations écrites sont par exemple relatives à une mission en cours, à une surveillance de divers paramètres de l'avion de chasse, à un message envoyé au pilote, etc.

La réalité augmentée permet aussi de compenser les effets d'une visibilité réduite.

La visibilité réduite peut être due à des conditions de vol de nuit ou à de mauvaises conditions météorologiques.

La visibilité réduite peut aussi être due à la position du pilote dans le cockpit de l'avion de chasse.

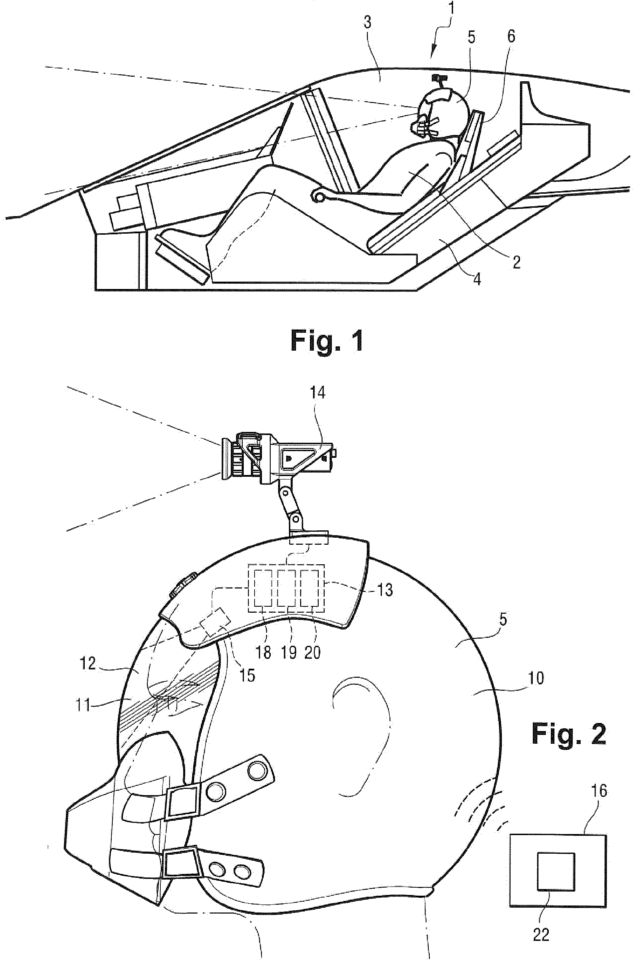

En référence à la figure 1, on sait que, dans un avion de chasse 1, la visibilité du pilote 2 est relativement réduite du fait des contraintes d'installation du pilote 2 dans le cockpit 3.

Dans l'avion de chasse 1, le pilote 2 est sanglé sur un siège éjectable 4. Le casque 5 du pilote 2 est maintenu en extension par l'appui-tête 6 du siège éjectable 4. Le pilote 2 ne peut, typiquement, orienter son casque 5 que de 15° en flexion vers l'avant, de 80° en rotation à gauche ou à droite, et de 45° en inclinaison sur le côté. Par ailleurs, les yeux du pilote 2 peuvent s'orienter de 30° environ vers le haut, le bas, la gauche et la droite. La perception des formes et des symboles par le pilote 2 est limitée à une zone située à +/-20° autour de la direction du regard.

En orientant directement le regard du pilote 2 vers des points d'intérêt sensibles, par exemple vers une cible, une piste d'atterrissage, un autre avion, la réalité augmentée permet de compenser cette visibilité réduite.

### OBJET DE L'INVENTION

L'invention a pour objet d'améliorer l'assistance fournie à un pilote d'aéronef par un dispositif de vision utilisant la technologie de la réalité augmentée.

### RESUME DE L'INVENTION

En vue de la réalisation de ce but, on propose un dispositif de vision pour pilote d'aéronef, comportant :
- un support destiné à être positionné sur la tête du pilote d'aéronef ;
- une surface d'affichage portée par le support et destinée à être positionnée à proximité et en regard des yeux du pilote d'aéronef ;
- des moyens d'affichage portés par le support et agencés pour afficher des objets de réalité augmentée sur la surface d'affichage ;
- des moyens d'acquisition agencés pour acquérir en temps réel des premières données représentatives d'une position et d'une orientation du support, des deuxièmes données représentatives d'une position et d'une orientation d'un cockpit de l'aéronef, des troisièmes données définissant des zones d'encombrement occupées par des équipements du cockpit, ainsi que les objets de réalité augmentée ;
- des moyens de traitement agencés pour définir en temps réel une position et/ou une orientation et/ou une forme et/ou une taille des objets de réalité augmentée en utilisant notamment les premières données, les deuxièmes données et les troisièmes données, de sorte que tous les objets de réalité augmentée sont positionnés à l'extérieur des zones d'encombrement lorsqu'ils sont affichés sur la surface d'affichage.

Le dispositif de vision selon l'invention permet donc d'assurer que les objets de réalité augmentée ne se superposent pas aux équipements du cockpit lorsqu'ils sont affichés.

Les équipements du cockpit comprennent des équipements qui fournissent au pilote des informations visibles. Ainsi, l'affichage des objets de réalité augmentée n'affecte pas la disponibilité de ces informations visibles.

Le dispositif de vision selon l'invention améliore ainsi l'assistance fournie au pilote.

On propose aussi un casque de pilote d'aéronef comportant une visière et un dispositif de vision tel que celui qui vient d'être décrit, la surface d'affichage étant située sur la visière.

On propose de plus des lunettes comportant des verres et un dispositif de vision tel que celui qui vient d'être décrit, la surface d'affichage étant située sur les verres.

On propose en outre un masque de réalité augmentée comportant un écran et un dispositif de vision tel que celui qui vient d'être décrit, la surface d'affichage étant située sur l'écran.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 représente un pilote assis dans un cockpit d'un avion de chasse ;
- la figure 2 représente un casque de pilote d'avion de chasse, dans lequel est intégré un dispositif de vision selon l'invention ;
- la figure 3 représente un champ de vision d'un pilote d'un avion de chasse.

### DESCRIPTION DETAILLEE DE L'INVENTION

En référence à la figure 2, le dispositif de vision pour pilote d'aéronef selon l'invention est ici intégré dans un casque de pilote d'aéronef 5, comprenant une coque 10 et une visière 11.

Par « pilote », on entend ici le pilote en charge du pilotage effectif de l'aéronef, mais aussi toute autre personne (par exemple un copilote ou un navigateur) susceptible de se trouver dans le cockpit lorsque l'aéronef est en vol.

L'aéronef est ici un avion de chasse.

La coque 10 du casque 5, qui est destinée à être positionnée sur la tête du pilote pour protéger la tête du pilote, forme un support du dispositif de vision.

Le dispositif de vision comporte aussi une surface d'affichage 12 portée par la coque 10 et destinée à être positionnée à proximité et en regard des yeux du pilote. La surface d'affichage 12 est ici une surface interne de la visière 11.

Le dispositif de vision comporte de plus un premier boîtier 13, une caméra 14, des moyens d'affichage 15 et un deuxième boîtier 16.

Le premier boîtier 13 est positionné sur la coque 10 du casque 5.

Par « boîtier », on entend ici à la fois un boîtier mécanique (ou carter), une ou plusieurs cartes électriques comprenant des composants électroniques et situées dans le boîtier, et des moyens de fixation ou d'intégration du boîtier mécanique à son environnement.

Le premier boîtier 13 comporte des moyens d'acquisition 18, des moyens de traitement 19 et des premiers moyens de mesure 20.

Les moyens d'acquisition 18 et les moyens de traitement 19 sont des éléments logiciels (*software*) et/ou matériels (*hardware*), inclus partiellement ou entièrement dans un ou plusieurs composants de traitement, et sont possiblement imbriqués les uns dans les autres. Le ou les composants de traitement comprennent par exemple un microcontrôleur, un ASIC, un FPGA, un DSP ou un processeur.

Les premiers moyens de mesure 20 comprennent une première centrale inertielle et des premiers capteurs.

Les premiers moyens de mesure 20 produisent des premières données représentatives notamment d'une position et d'une orientation du casque 5 et de sa coque 10. Les premières données sont aussi représentatives d'une direction de regard du pilote. La première centrale inertielle est agencée pour contribuer à produire les premières données (en l'occurrence, la position et l'orientation du casque 5).

La caméra 14 produit un flux audio/vidéo image de l'environnement visible réel et de l'environnement sonore réel du pilote. La caméra 14 est connectée au premier boîtier 13 via des moyens de communication quelconques filaires ou non filaires.

Les moyens d'affichage 15 sont portés par la coque 10 et sont positionnés en regard de la surface d'affichage 12. Les moyens d'affichage 15 sont agencés pour afficher des objets de réalité augmentée sur la surface d'affichage 12.

Les objets de réalité augmentée sont par exemple des images ou des informations écrites. Les objets de réalité augmentée sont soit produits avant une mission de l'avion de chasse et enregistrés dans une mémoire, soit produits dynamiquement en fonction, par exemple, d'indications fournies par des instruments de bord de l'avion de chasse.

Les images sont par exemple des images d'une piste d'atterrissage, de reliefs du sol (montagne, vallée, etc.), de la mer, d'une cible quelconque, d'autres aéronefs ou de divers véhicules, de bâtiments divers, etc. Les informations écrites sont par exemple relatives à une mission en cours, à une surveillance de divers paramètres de l'avion de chasse, à un message envoyé au pilote, etc.

Les moyens d'affichage 15 comprennent ici un projecteur qui projette les objets de réalité augmentée sur la surface d'affichage 12, de sorte que ceux-ci sont superposés à l'environnement visible réel du pilote.

Le deuxième boîtier 16 est positionné dans le cockpit.

Le deuxième boîtier 16 comporte des deuxièmes moyens de mesure 22.

Les deuxièmes moyens de mesure 22 comprennent une deuxième centrale inertielle et un récepteur GPS (pour *Global Positioning System,* en anglais).

Les deuxièmes moyens de mesure 22 produisent des deuxièmes données représentatives notamment d'une position géographique et d'une orientation dans les trois axes de l'avion de chasse, d'une vitesse et d'une direction de vol de l'avion de chasse (et donc du cockpit). La deuxième centrale inertielle est agencée pour contribuer à produire les deuxièmes données (en l'occurrence, l'orientation du cockpit).

Le deuxième boîtier 16 est relié au premier boîtier 13 via des deuxièmes moyens de communication quelconques filaires ou non filaires.

On décrit maintenant plus en détail le fonctionnement du dispositif de vision selon l'invention.

Le dispositif de vision a pour but d'afficher les objets de réalité augmentée sur la surface d'affichage 12, sans que ceux-ci, lorsqu'ils sont vus par le pilote, ne soient superposés aux équipements du cockpit.

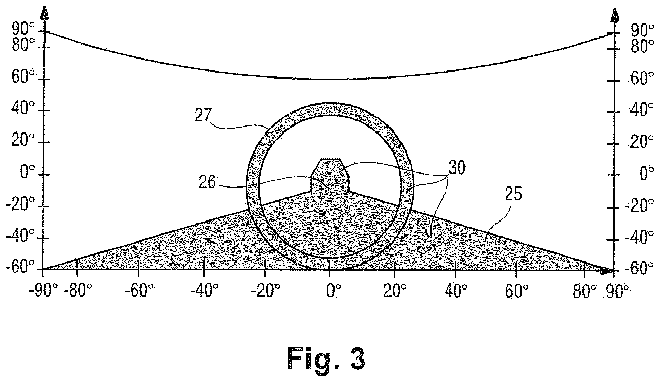

En référence à la figure 3, les équipements du cockpit comprennent ici des instruments de vol 25, un miroir d'affichage tête haute 26 ainsi que des éléments de structure du cockpit.

Les éléments de structure du cockpit comprennent un arceau de verrière 27 muni d'un ou de plusieurs rétroviseurs.

Les moyens d'acquisition 18 du premier boîtier 13 sont agencés pour acquérir en temps réel les premières données et les deuxièmes données. Les moyens d'acquisition 18 acquièrent aussi des troisièmes données définissant des zones d'encombrement 30 occupées par les équipements du cockpit. Les zones d'encombrement 30 correspondent donc aux surfaces occupées par les équipements du cockpit.

Les troisièmes données peuvent être stockées dans une mémoire du premier boîtier 13 ou du deuxième boîtier 16, et peuvent avoir été générées préalablement à la mise en service du dispositif de vision.

Les troisièmes données peuvent ainsi comprendre une représentation en trois dimensions du cockpit et des équipements du cockpit.

La représentation en trois dimensions peut être obtenue par une modélisation d'un modèle de cockpit correspondant au cockpit de l'avion de chasse. La représentation en trois dimensions peut aussi être obtenue par le traitement d'images produites par la caméra 14 du dispositif de vision au moment d'une initialisation du dispositif de vision (ou bien par une autre caméra située dans le cockpit).

Les troisièmes données peuvent aussi comprendre une image représentant des délimitations correspondant aux zones d'encombrement 30.

L'acquisition réalisée par les moyens d'acquisition 18 consiste donc dans ce cas à récupérer les troisièmes données stockées dans une mémoire.

Les troisièmes données peuvent aussi être acquises dynamiquement par les moyens d'acquisition 18.

L'acquisition dynamique peut par exemple utiliser des marqueurs dont la position permet de définir les zones d'encombrement 30. Les marqueurs peuvent être des éléments ajoutés aux équipements du cockpit (par exemple des étiquettes collées sur les équipements du cockpit), ou bien peuvent être des formes géométriques de la structure des équipements du cockpit (par exemple, un coin, une ligne, un angle droit, etc.). Les marqueurs sont reconnus en temps réel et permettent de définir en temps réel les zones d'encombrement 30.

L'acquisition dynamique peut aussi être effectuée par un traitement d'images, à partir d'images produites par la caméra 14 du dispositif de vision. Grâce à ces images, les équipements du cockpit sont reconnus en temps réel et les zones d'encombrement 30 sont définies en temps réel. La caméra 14 est ainsi agencée pour contribuer à produire les troisièmes données.

Les moyens d'acquisition 18 acquièrent aussi les objets de réalité augmentée.

Puis, les moyens de traitement 19 du dispositif de vision sont agencés pour définir en temps réel une position et/ou une orientation et/ou une forme et/ou une taille des objets de réalité augmentée en utilisant notamment les premières données, les deuxièmes données et les troisièmes données.

Les moyens de traitement 19 analysent les premières données, les deuxièmes données et les troisièmes données pour recréer en temps réel et en trois dimensions l'environnement visible réel du pilote, et intègrent dans cet environnement visible réel les objets de réalité augmentée.

L'intégration des objets de réalité augmentée est réalisée de sorte que les objets de réalité augmentée soit visibles facilement par le pilote lorsque les objets de réalité augmentée sont projetés sur la surface d'affichage 12.

L'intégration des objets de réalité augmentée est aussi réalisée de sorte que les objets de réalité augmentée sont positionnés à l'extérieur des zones d'encombrement 30 lorsqu'ils sont projetés sur la surface d'affichage 12.

Ainsi, l'affichage des objets de réalité augmentée ne vient à aucun moment masquer entièrement ou partiellement les équipements du cockpit.

Avantageusement, le dispositif de vision peut être désactivé à tout moment par la réalisation d'une action de désactivation détectée par le dispositif de vision.

L'action de désactivation peut être un geste détectée par exemple à l'aide de la caméra 14 du dispositif de vision, ou une parole détectée à l'aide d'un microphone du dispositif de vision.

Suite à une désactivation, le dispositif de vision peut aussi être réactivé à tout moment par la réalisation d'une action de réactivation détectée par le dispositif de vision. L'action de réactivation peut être semblable ou non à l'action de désactivation.

Un autotest du dispositif de vision peut aussi être lancé à tout moment par la réalisation d'une action d'autotest. L'action d'autotest peut à nouveau être un geste ou une parole. L'autotest peut notamment permettre de forcer un réalignement des zones d'encombrement 30 définies avec les troisièmes données sur les équipements réels du cockpit. L'autotest peut aussi afficher les zones d'encombrement 30 pour que le pilote vérifie lui-même qu'elles sont bien alignées avec les équipements réels du cockpit.

Bien entendu, l'invention n'est pas limitée au mode de réalisation décrit mais englobe toute variante entrant dans le champ de l'invention telle que définie par les revendications.

On a décrit ici un dispositif de vision intégré dans un casque. Le dispositif de vision pourrait aussi être intégré dans un équipement différent, par exemple dans des lunettes ou dans un masque de réalité augmentée.

Dans le cas des lunettes, la surface d'affichage est située sur des verres des lunettes. Par « verre », on entend un élément transparent de forme générale plate au travers duquel le pilote voit son environnement visible réel. Le support comprend les montures ou la structure des lunettes. Dans le cas des lunettes, tout comme dans le cas du casque et de sa visière, les objets de réalité augmentée sont projetés sur les verres et se superposent à l'environnement visible réel vu directement par le pilote.

Dans le cas du masque de réalité augmentée, la surface d'affichage est située sur un écran positionné en regard des yeux du pilote. L'affichage des objets de réalité augmentée est alors un affichage sur écran, et non une projection réalisée par un projecteur. Le support comprend la structure du masque de réalité augmentée. Dans le cas du masque, l'environnement visible réel est filmé et affiché en temps réel sur l'écran, et est donc vu par le pilote via son affichage sur l'écran et non directement (la vision directe du pilote est masquée par l'écran). Les objets de réalité augmentée sont intégrés à l'environnement visible réel affiché sur l'écran.

On a évoqué un certain nombre d'équipements du cockpit, mais d'autres équipements du cockpit peuvent aussi être pris en compte, par exemple un siège de copilote ou un autre élément de structure du cockpit.

L'architecture du dispositif de vision peut être différente. Le premier boîtier et le deuxième boîtier pourraient tous deux être situés sur le support du dispositif de vision, ou bien pourraient être fusionnés en un unique boîtier. Le premier boîtier pourrait être lui aussi positionné dans le cockpit et non porté par le support.

## Revendications

1. Dispositif de vision pour pilote d'aéronef, comportant :
- un support (10) destiné à être positionné sur la tête du pilote d'aéronef ;
- une surface d'affichage (12) portée par le support et destinée à être positionnée à proximité et en regard des yeux du pilote d'aéronef ;
- des moyens d'affichage (15) portés par le support et agencés pour afficher des objets de réalité augmentée sur la surface d'affichage ;
- des moyens d'acquisition (18) agencés pour acquérir en temps réel des premières données représentatives d'une position et d'une orientation du support, des deuxièmes données représentatives d'une position et d'une orientation d'un cockpit de l'aéronef, des troisièmes données définissant des zones d'encombrement (30) occupées par des équipements du cockpit, ainsi que les objets de réalité augmentée ;
- **caractérisé par** des moyens de traitement (19) agencés pour définir en temps réel une position et/ou une orientation et/ou une forme et/ou une taille des objets de réalité augmentée en utilisant notamment les premières données, les deuxièmes données et les troisièmes données, de sorte que tous les objets de réalité augmentée sont positionnés à l'extérieur des zones d'encombrement (30) lorsqu'ils sont affichés sur la surface d'affichage (12).

2. Dispositif de vision selon la revendication 1, dans lequel les équipements du cockpit comportent des instruments de vol (25) et/ou un miroir d'affichage tête haute (26) et/ou un élément de structure du cockpit.

3. Dispositif de vision selon la revendication 2, dans lequel l'élément de structure du cockpit comporte un arceau de verrière (27) muni d'un rétroviseur.

4. Dispositif de vision selon la revendication 1, comportant une première centrale inertielle portée par le support et agencée pour contribuer à produire les premières données.

5. Dispositif de vision selon la revendication 1, comportant une deuxième centrale inertielle agencée pour contribuer à produire les deuxièmes données.

6. Dispositif de vision selon la revendication 1, comportant une caméra (14) portée par le support et agencée pour contribuer à produire les troisièmes données.

7. Casque de pilote d'aéronef (5) comportant une visière (11) et un dispositif de vision selon l'une des revendications précédentes, la surface d'affichage (12) étant située sur la visière (11).

8. Lunettes comportant des verres et un dispositif de vision selon l'une des revendications 1 à 6, la surface d'affichage étant située sur les verres.

9. Masque de réalité augmentée comportant un écran et un dispositif de vision selon l'une des revendications 1 à 6, la surface d'affichage étant située sur l'écran.

## Patentansprüche

1. Sichtgerät für einen Luftfahrzeugpiloten, umfassend:
- einen Träger (10), der dazu bestimmt ist, auf dem Kopf des Luftfahrzeugpiloten positioniert zu werden;
- eine Anzeigefläche (12), die von dem Träger getragen wird und dazu bestimmt ist, in der Nähe und gegenüber den Augen des Luftfahrzeugpiloten positioniert zu werden;
- Anzeigemittel (15), die von dem Träger getragen werden und ausgebildet sind, um Erweiterte-Realität-Objekte auf der Anzeigefläche anzuzeigen;
- Erfassungsmittel (18), die ausgebildet sind, um in Echtzeit erste Daten zu erfassen, die repräsentativ für eine Position und eine Ausrichtung des Trägers sind, zweite Daten, die repräsentativ für eine Position und eine Ausrichtung eines Cockpits des Luftfahrzeugs sind, dritte Daten, die überfüllte Zonen (30) definieren, die von Cockpitausrüstungen eingenommen sind, sowie die Erweiterte-Realität-Objekte;
**gekennzeichnet durch** Verarbeitungsmittel (19), die ausgebildet sind, um in Echtzeit eine Position und/oder eine Ausrichtung und/oder eine Form und/oder eine Größe von Erweiterte-Realität-Objekten zu definieren, indem insbesondere die ersten Daten, die zweiten Daten und die dritten Daten verwendet werden, sodass alle Erweiterte-Realität-Objekte außerhalb der überfüllten Zonen (30) angeordnet sind, wenn sie auf der Anzeigefläche (12) angezeigt werden.

2. Sichtgerät nach Anspruch 1, bei dem die Cockpitausrüstungen Fluginstrumente (25) und/oder einen Head-Up-Display-Spiegel (26) und/oder ein Strukturelement des Cockpits umfassen.

3. Sichtgerät nach Anspruch 2, bei dem das Strukturelement des Cockpits einen Kabinenhaubenbogen (27) umfasst, der mit einem Rückspiegel versehen ist.

4. Sichtgerät nach Anspruch 1, umfassend eine erste inertiale Messeinheit, die von dem Träger getragen wird und ausgebildet ist, um zum Erzeugen der ersten Daten beizutragen.

5. Sichtgerät nach Anspruch 1, umfassend eine zweite inertiale Messeinheit, die ausgebildet ist, um zum Erzeugen der zweiten Daten beizutragen.

6. Sichtgerät nach Anspruch 1, umfassend eine Kamera (14), die von dem Träger getragen wird und ausgebildet ist, um zum Erzeugen der dritten Daten beizutragen.

7. Luftfahrzeugpilot-Helm (5), umfassend ein Visier (11) und ein Sichtgerät nach einem der vorhergehenden Ansprüche, wobei sich die Anzeigefläche (12) auf dem Visier (11) befindet.

8. Brille, umfassend Gläser und ein Sichtgerät nach einem der Ansprüche 1 bis 6, wobei sich die Anzeigefläche auf den Gläsern befindet.

9. Erweiterte-Realität-Maske, umfassend einen Bildschirm und ein Sichtgerät nach einem der Ansprüche 1 bis 6, wobei sich die Anzeigefläche auf dem Bildschirm befindet.

## Claims

1. A viewing device for an aircraft pilot, the viewing device comprising:
▪ a support (10) for positioning on the head of the aircraft pilot;
▪ a display surface (12) carried by the support and for positioning in the proximity of and facing the eyes of the aircraft pilot;
▪ display means (15) carried by the support and arranged to display augmented reality objects on the display surface;
▪ acquisition means (18) arranged to act in real time to acquire first data representative of the position and of the orientation of the support, second data representative of the position and of the orientation of a cockpit of the aircraft, and third data defining congested zones (30) occupied by equipment of the cockpit, and also to acquire the augmented reality objects;
▪ **characterized by** processor means (19) arranged to act in real time to define a position and/or an orientation and/or a shape and/or a size for the augmented reality objects by making use in particular of the first data, of the second data, and of the third data, so that all of the augmented reality objects are positioned outside the congested zones (30) when they are displayed on the display surface (12).

2. A viewing device according to claim 1, wherein the cockpit equipment comprises flight instruments (25) and/or a head-up display mirror (26) and/or a structural element of the cockpit.

3. A viewing device according to claim 2, wherein the structural element of the cockpit comprises a canopy arch (27) provided with a rear-view mirror.

4. A viewing device according to claim 1, including a first inertial unit carried by the support and arranged to contribute to producing the first data.

5. A viewing device according to claim 1, including a second inertial unit arranged to contribute to producing the second data.

6. A viewing device according to claim 1, including a camera (14) carried by the support and arranged to contribute to producing the third data.

7. An aircraft pilot helmet (5) including a visor (11) and a viewing device according to any preceding claim, the display surface (12) being situated on the visor (11).

8. Eyeglasses including lenses and a viewing device according to any one of claims 1 to 6, the display surface being situated on the lenses.

9. An augmented reality mask comprising a screen and a viewing device according to any one of claims 1 to 6, the display surface being situated on the screen.
